# DEMANDE DE BREVET EUROPEEN

(11) **EP 2 620 323 A1**
(43) Date de publication de la demande: **31.07.2013**
(21) Numéro de dépôt: 13151714.6
(22) Date de dépôt: 17.01.2013
(51) Int. Cl.: B60P 3/12, B60P 3/07

(54) **Véhicule destiné au transport notamment des automobiles**

(30) Priorité: 24.01.2012 FR 1250684
(71) Demandeur: Borgeaud, Georges, 25220 Amagney (FR)
(72) Inventeur: Borgeaud, Georges, 25220 Amagney (FR)
(74) Mandataire: Brungard, Yves Francois

(57) **Abrégé**

Véhicule (1) destiné au transport d'automobiles (2), constitué d'un tracteur routier (3) se prolongeant par un châssis (4), porteur d'une plateforme basculante (5), munie à son extrémité arrière d'une rampe d'accès relevable (6), caractérisé en ce que le châssis porteur (4) d'origine reçoit un châssis rapporté (7) sur lequel est agencé la première plateforme (5), qui est elle-même associée à une remorque (8) formant une seconde plateforme (9) non basculante, munie à son extrémité arrière d'une rampe d'accès relevable (10), ladite remorque (8) étant escamotable sous la première plateforme (5) en position « hors service », et pouvant en être extraite en position « service », pour le transport éventuel d'une seconde automobile (2a), par l'intermédiaire de moyens d'entrainement dans un sens ou dans l'autre, interposés entre la première plateforme (5) et la remorque (8) formant la seconde plateforme (9).

## Description

La présente invention concerne un véhicule destiné au transport des automobiles de tourisme, mais également camions ou engins de travaux publics de tous types.

De tels véhicules de transport connus sont constitués d'un tracteur routier se prolongeant par un châssis, porteur d'une plateforme basculante, munie à son extrémité arrière d'une rampe d'accès relevable.

On comprend bien que cela permet de ne transporter qu'une automobile ou un engin à la fois. C'est pourquoi il est connu également de prévoir des véhicules de transport plus long, voire à étages, mais le handicap réside alors dans leur encombrement inutile lorsqu'à l'inverse, il ne transporte qu'une seule voiture.

Il est également connu d'utiliser une remorque optionnelle formant une plateforme, à accrocher au véhicule de transport de base selon les besoins. Ceux-ci ne sont pas toujours connus d'avance pour anticiper une intervention et de toutes façons, ladite remorque pose des problèmes d'encombrement, qu'elle soit stockée ou attelée inutilement.

La présente invention a pour but de remédier à l'ensemble de ces inconvénients en proposant un véhicule de transport unitaire, transformable selon les besoins.

A cet effet, elle concerne un véhicule destiné au transport d'automobiles, constitué d'un tracteur routier se prolongeant par un châssis, porteur d'une plateforme basculante, munie à son extrémité arrière d'une rampe d'accès relevable, **caractérisé en ce que** le châssis porteur d'origine reçoit un châssis rapporté sur lequel est agencé la première plateforme, qui est elle-même associée à une remorque formant une seconde plateforme non basculante, munie à son extrémité arrière d'une rampe d'accès relevable, ladite remorque étant escamotable sous la première plateforme en position « hors service », et pouvant en être extraite en position « service », pour le transport éventuel d'une seconde automobile, par l'intermédiaire de moyens d'entrainement dans un sens ou dans l'autre, interposés entre la première plateforme et la remorque formant la seconde plateforme.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente une vue latérale schématique d'un véhicule de transport selon l'invention, avec sa remorque escamotée, transportant une seule automobile.
La figure 2 représente, en situation, un véhicule de transport selon la figure 1, avec sa remorque extraite, transportant deux automobiles.
La figure 3 est une vue en coupe longitudinale, à plus grande échelle, des moyens d'entrainement de la remorque pour une position « service » ou « hors service ».
La figure 4 est une vue en coupe transversale selon la coupe AA de la figure 3.

Le véhicule de transport 1 désigné globalement sur les figures est constitué par un tracteur routier 3 se prolongeant par un châssis 4, porteur d'une plateforme basculante 5, munie à son extrémité arrière d'une rampe d'accès relevable 6.

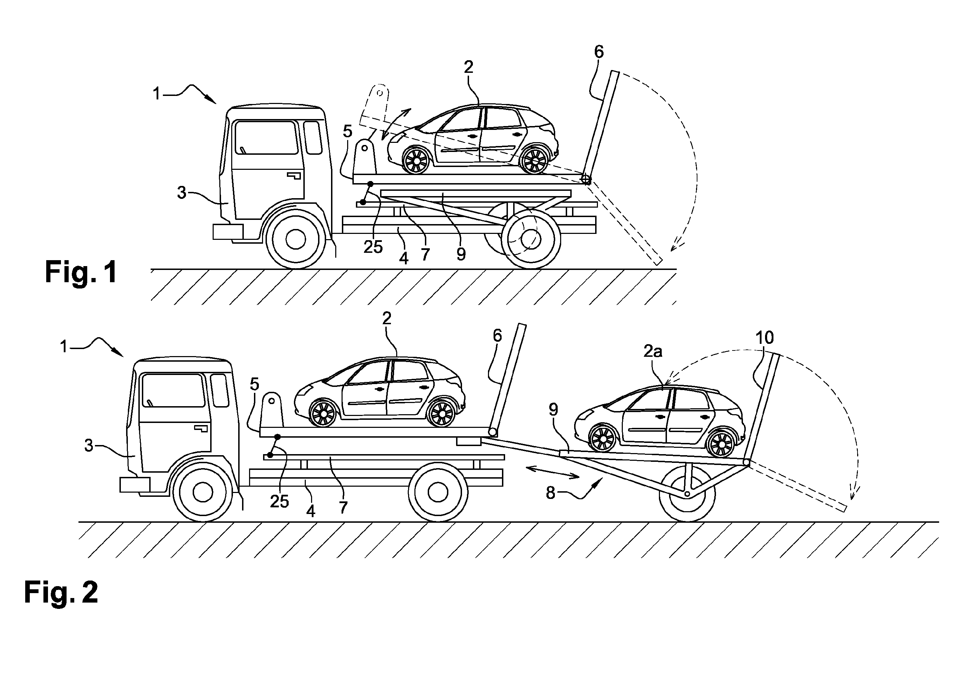

Selon l'invention, le châssis porteur 4 d'origine reçoit un châssis rapporté 7 sur lequel est agencé la première plateforme 5, qui est elle-même associée à une remorque 8 formant une seconde plateforme 9 non basculante, munie à son extrémité arrière d'une rampe d'accès relevable 10, ladite remorque 8 étant escamotable sous la première plateforme 5 en position « hors service » (voir figure 1), et pouvant en être extraite en position « service » (voir figure 2), pour le transport éventuel d'une seconde automobile 2a, par l'intermédiaire de moyens d'entrainement dans un sens ou dans l'autre, interposés entre la première plateforme 5 et la remorque 8 formant la seconde plateforme 9.

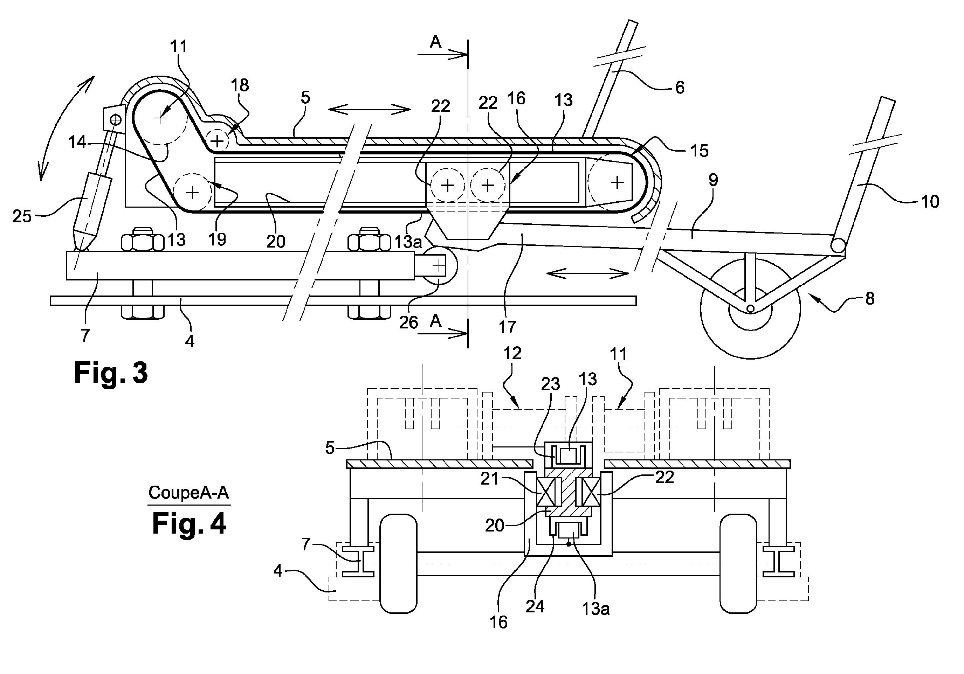

Ces moyens d'entrainement de la remorque 8 formant la seconde plateforme 9 par rapport à la première 5 sont embarqués sur celle-ci et sont constitués par un moteur électrique 11 (voir figures 3 et 4), disposé à une extrémité avant de ladite plateforme 5 et associé à un treuil 12 entrainant une chaine 13 disposée en boucle entre un pignon denté 14 du treuil 12 et un pignon tendeur denté 15 disposé à proximité de l'extrémité arrière de la première plateforme 5, chaine 13 sur une zone inférieure 13a de laquelle est solidarisé un chariot 16 mobile en translation, sur lequel est fixé le timon 17 de la remorque 8 formant la deuxième plateforme 9.

D'autres pignons 18 et 19 guident et conforment le parcours de la chaine 13.

Selon une autre caractéristique, le chariot mobile 16 solidaire de la chaine d'entrainement 13 est guidé en translation par l'intermédiaire d'une poutre 20 en I, entre les ailes supérieure et inférieure desquelles sont aptes à se positionner deux roues de guidage 21,22 dudit chariot.

Les roues 21,22 sont disposées par paire, de part et d'autre de la poutre 20 en I.

Par ailleurs, les faces supérieure et inférieure de la poutre 20 en I forment des glissières en U 23 et 24 entre les ailes latérales desquelles est guidée la chaine 13.

La zone d'extrémité avant de la première plateforme 5 est commandée en basculement vers l'arrière, par l'intermédiaire d'un vérin 25 interposé entre ladite extrémité et une zone en regard du châssis rapporté 7.

Le basculement de la première plateforme 5 s'effectue autour d'une articulation 26 située à l'arrière du châssis rapporté 7.

## Revendications

1. Véhicule (1) destiné au transport d'automobiles (2), constitué d'un tracteur routier (3) se prolongeant par un châssis (4), porteur d'une plateforme basculante (5), munie à son extrémité arrière d'une rampe d'accès relevable (6), **caractérisé en ce que** le châssis porteur (4) d'origine reçoit un châssis rapporté (7) sur lequel est agencé la première plateforme (5), qui est elle-même associée à une remorque (8) formant une seconde plateforme (9) non basculante, munie à son extrémité arrière d'une rampe d'accès relevable (10), ladite remorque (8) étant escamotable sous la première plateforme (5) en position « hors service », et pouvant en être extraite en position « service », pour le transport éventuel d'une seconde automobile (2a), par l'intermédiaire de moyens d'entrainement dans un sens ou dans l'autre, interposés entre la première plateforme (5) et la remorque (8) formant la seconde plateforme (9).

2. Véhicule selon la revendication 1, **caractérisé en ce que** les moyens d'entrainement de la remorque (8) formant la seconde plateforme (9) par rapport à la première (5) sont embarqués sur celle-ci et sont constitués par un moteur électrique (11), disposé à une extrémité avant de ladite plateforme (5) et associé à un treuil (12) entrainant une chaine (13) disposée en boucle entre un pignon denté (14) du treuil (12) et un pignon tendeur denté (15) disposé à proximité de l'extrémité arrière de la première plateforme (5), chaine (13) sur une zone inférieure (13a) de laquelle est solidarisé un chariot (16) mobile en translation, sur lequel est fixé le timon (17) de la remorque (8) formant la deuxième plateforme (9).

3. Véhicule selon la revendication 2, **caractérisé en ce que** le chariot mobile (16) solidaire de la chaine d'entrainement (13) est guidé en translation par l'intermédiaire d'une poutre (20) en I, entre les ailes supérieure et inférieure desquelles sont aptes à se positionner deux roues de guidage (21,22) dudit chariot.

4. Véhicule selon la revendication 3, **caractérisé en ce que** les faces supérieure et inférieure de la poutre (20) en I forment des glissières en U (23 et 24) entre les ailes latérales desquelles est guidée la chaine (13).

5. Véhicule selon l'une des revendications 1 ou 3, **caractérisé en ce que** la zone d'extrémité avant de la première plateforme (5) est commandée en basculement vers l'arrière, par l'intermédiaire d'un vérin (25) interposé entre ladite extrémité et une zone en regard du châssis rapporté (7).

6. Véhicule selon la revendication 5, **caractérisé en ce que** le basculement de la première plateforme (5) s'effectue autour d'une articulation (26) située à l'arrière du châssis rapporté (7).
